# EUROPÄISCHE PATENTANMELDUNG

(11) **EP 1 009 146 A2**
(43) Veröffentlichungstag der Anmeldung: **14.06.2000**
(21) Anmeldenummer: 99124148.0
(22) Anmeldetag: 02.12.1999
(51) Int. Cl.: H04M 1/725, H04M 3/54

(54) **Funkkommunikationssystem und Verfahren zum Weiterleiten eines ankommenden Anrufs sowie zum Auswählen eines Endgeräts**

(30) Priorität: 11.12.1998 DE 19857346
(71) Anmelder: NOKIA MOBILE PHONES LTD., 02150 Espoo (FI)
(72) Erfinder: Decker, Peter, 45772 Marl (DE); Joeressen, Olaf, 40235 Düsseldorf (DE)
(74) Vertreter: TER MEER STEINMEISTER & PARTNER GbR

(57) **Zusammenfassung**

Die Erfindung betrifft ein Kommunikationssystem mit einer Basiseinheit (20) zum Empfangen und Weiterleiten von Anrufen, zumindest zwei Endgeräten (30) und wenigstens einem Funkruf-Auswahl-Modul (10). Um einen von der Basiseinheit für einen bestimmten Teilnehmer empfangenen Anruf an diesen weiterleiten zu können, wird nach Empfang eines Anrufs ein angerufener Teilnehmer im Funkrufverfahren von der Basiseinheit (20) ausgerufen. Der ausgerufene Teilnehmer wählt daraufhin ein für den ankommenden Anruf geeignetes Endgerät (30) mittels des Funkruf-Auswahl-Moduls (10) aus und aktiviert es, so daß das ausgewählte Endgerät (30) eine entsprechende Meldungzur Basiseinheit (20) überträgt, umnach Aufbau der Verbindung dem Teilnehmer die Betriebsbereitschaft in üblicher Weise anzuzeigen.

## Beschreibung

Die Erfindung betrifft ein Kommunikationssystem und ein Verfahren zum Weiterleiten eines ankommenden Anrufs sowie zumAuswählen eines Endgerats in dem Kommunikationssystem.

In einem herkömmlichen Kommunikationssystem, beispielsweise in einem stationären Telefonnetz oder einem Mobilfunknetz ist jedem Teilnehmer-Endgerät eine eigene Telefon- oder Identifikationsnummer zugewiesen.Will ein Teilnehmer einen anderen anrufen, so wählt er dessen Telefonnummer oder besser gesagt die Telefon- oder Identifikationsnummer des Endgeräts, das dieser Teilnehmer üblicherweise benutzt. Befindet sich ein Teilnehmer nicht bei seinem üblicherweise benutzten Endgerät, so besteht bei einigen bekannten Kommunikationssystemen die Möglichkeit, daß mit Hilfe eines Rufweiterleitungsverfahrens für ein Endgerät A bestimmte Anrufe zu einem Endgerät B umgeleitet werden.

Aus der EP 0 529 721 B1 ist ein Verfahren zur Erleichterung der Rufumleitung von einem Mobiltelefon zu einem Festnetztelefon bekannt, bei dem wahrend des Ausschaltens des Mobiltelefons eine Telefonnummer eines Festnetztelefons eingegeben wird, zu dem für das Mobiltelefon bestimmte Anrufe umgeleitet werden sollen. Zur Erleichterung der Eingabe der Telefonnummer des Festnetztelefons ist an diesem dessen Telefonnummer in Form eines Bar Code oder Strichcodes angebracht. Das Mobiltelefon weist einen entsprechenden Strichcodeleser auf, mit dem der Strichcode am Festtelefon abgetastet werden kann, um die entsprechende Telefonnummer einzulesen.

Um ein bestimmtes Festnetztelefon für ankommende Anrufe benutzen zu können, ist es also erforderlich, daß der jeweilige Teilnehmer ein eigenes Mobiltelefon zur Verfügunghat, um für dieses bestimmte Anrufe zum Festnetztelefon umleiten zu können.

Der Erfindung liegt die Aufgabe zugrunde, ein weiteres Kommunikationssystem und ein Verfahren zum Weiterleiten ankommender Anrufe sowie zumAuswählen eines Endgeräts in dem Kommunikationssystem bereitzustellen, das es einem Teilnehmer ermöglicht, einen Anruf an jedem geeigneten Endgerät des Kommunikationssystems annehmen zu können.

Diese Aufgabe wird durch das Kommunikationssystem nach Anspruch 1 bzw. die Verfahren nach Anspruch 9 und 10 gelöst.

Erfindungsgemäß umfaßt ein Kommunikationssystem mit einer Basiseinheit zum Empfangen und Weiterleiten von Anrufen und zumindest zwei Endgeräten wenigstens ein Funkruf-Auswahl-Modul, das über eine Funkruf-Schnittstelle von der Basiseinheit ansprechbar ist und das über eine Auswahl-Schnittstelle mitjedem der Endgeräte kommunizieren kann, um eines der Endgeräte für eine gewünschte Kommunikation auszuwählen. Erfindungsgemäß besitzt jeder Teilnehmer des Kommunikationssystems ein eigenes Funkruf-Auswahl-Modul, das von der Basiseinheit ausgerufen wird, sobald ein Anruffür den Teilnehmer eintrifft. Das Funkruf-Auswahl-Modul liefert dann ein einen ankommendenAnrufanzeigendes Signal, das vorzugsweise akustisch ist und den Teilnehmer auf den Anruf aufmerksam macht. Anstelle des akustischen Signals oder zusätzlich dazu kann auch ein optisches. ein taktiles oder haptisches Signal vom Funkruf-Auswahl-Modul ausgegeben werden.

Mit Hilfe des Funkruf-Auswahl-Moduls hat der Teilnehmer nun die Möglichkeit, über dieAuswahl-Schnittstelle ein geeignetes in der Nähe befindliches Endgerät auszuwählen, um den ankommenden Anruf entgegenzunehmen.

Das erfindungsgemäße Kommunikationssystem ermöglicht es also jedem Teilnehmer, jedes Endgerät des Kommunikationssystems zu benutzen, um einen für ihn speziell bestimmten Anruf entgegenzunehmen, indem er entsprechend einem Ausruf- oder Pagingverfahren von der Basiseinheit über das Funkruf-Auswahl-Modul ausgerufen und damit auf den ankommenden Anruf aufmerksam gemacht wird. Der Teilnehmer hat dann die Möglichkeit mit Hilfe der Auswahlfunktion des Funkruf-Auswahl-Moduls eines der Endgeräte auszuwählen und für die Entgegennahme des Anrufs zu benutzen.

Um dabei eine eindeutige Auswahl eines Endgeräts sicherzustellen, ist erfindungsgemäß vorgesehen, daß das Funkruf-Auswahl-Modul zur Kommunikation mit jedem der Endgeräte als Auswahlschnittstelle eine gerichtete drahtlose Schnittstelle, vorzugsweise eine Infrarotschnittstelle aufweist.

Um bei der Benutzung des Kommunikationssystems weitgehend sicherzustellen, daß ein ankommender Anruf nicht nur den gewünschten Teilnehmer erreicht, sondern daß auch eine Berechtigung des Teilnehmers vorliegt, ist bei einer bevorzugten Ausgestaltung der Erfindung vorgesehen, daß das Funkruf-Auswahl-Modul eine Teilnehmeridentifikationseinheit umfaßt, wobei die Teilnehmeridentifikationseinheit austauschbare Teilnehmeridentifikationsmittel, insbesondere eine austauschbare Teilnehmeridentifikationskarte aufweist. Als austauschbares Teilnehmeridentifikationsmittel kann dabei jeder geeignete Datenträger verwendet werden, der in einfacher und sicherer Weise in das Funkruf-Auswahl-Modul eingesetzt werden kann.

Zweckmäßigerweise umfaßt das Funkruf-Auswahl-Modul des Kommunikationssystems eine Steuereinheit, die in Abhängigkeit von einem Startsignal über die Auswahlschnittstelle mit einem vom Teilnehmer ausgewählten Endgerät kommuniziert, um dieses für die gewünschte Kommunikation zu aktivieren.

Sobald ein Ausruf- oder Pagingsignal von einem Funkruf-Auswahl-Modul empfangen und ein entsprechendes Anzeigesignal ausgegeben wurde, braucht der Teilnehmer nur noch das Funkruf-Auswahl-Modul mit der gerichteten Auswahl-Schnittstelle aufeine entsprechend gerichtete Schnittstelle eines ausgewählten Endgeräts auszurichten und beispielsweise über einen Startknopf oder dergleichen ein Startsignal zu aktivieren, auf das hin von der Steuereinheit der Auswahl- und Aktivierungsdialog mit dem Endgerät geführt wird, um dieses für die Entgegennahme des für den entsprechenden Teilnehmer bestimmten Anrufs zu aktivieren.

Um dem Teilnehmer die Auswahl eines geeigneten Endgerats zu erleichtern, ist bei einer vorteilhaften Ausgestaltung der Erfindung vorgesehen, daß beim Ausrufen des angerufenen Teilnehmers Informationen über die Art des Anrufs mit übertragen werden.

Kommunikationssystem im Sinne der vorliegenden Erfindung kann jedes feste oder mobile Kommunikationssystem sein. Besonders vorteilhaft läßt sich jedoch die Erfindung bei Nebenstellenanlagen einsetzen, wobei die Endgeräte mit der Basiseinheit die Basisstruktur einer Nebenstellenanlage bilden. Unter Endgeräten sind hierbei sämtliche möglichen Endgerät einer Nebenstellenanlage oder eines anderen Kommunikationssystems zu verstehen, also Festtelefone, Mobiltelefone, stationäre oder mobile Faxgeräte, Bildtelefone oder dergleichen.

Dabei kann vorgesehen sein, daß zumindest ein Teil der Endgeräte über drahtgebundene Schnittstellen mit der Basiseinheit kommunizieren, wobei auch ein Teil der Endgeräte über Funkschnittstellen mit der Basiseinheit kommunizieren kann.

Obwohl es grundsätzlich denkbar ist, daß jeder Teilnehmerjedes beliebige Endgerät des Kommunikationssystems ohne weiteres benutzen kann, ist es besonders zweckmäßig, wenn vorgesehen ist, daß ein Benutzer ein für einen Kommunikationsvorgang geeignetes Endgerät mittels des FunkrufAuswahl-Moduls auswählt und aktiviert. Auf diese Weise läßt sich ein Mißbrauch und eine unberechtigte Benutzung des Kommunikationssystems weitgehend ausschließen. Darüber hinaus besteht die Möglichkeit, einem anzurufenden Teilnehmer mitzuteilen, wer den Anrufveranlaßt hat, und zwar unabhängig davon, von welchem Endgerät des Kommunikationssystems aus der Anruf getätigt wird.

Die Weiterleitung eines ankommenden Anrufs in dem erfindungsgemäßen Kommunikationssystem erfolgt vorzugsweise dadurch, daß nach Empfang eines Anrufs ein angerufener Teilnehmer im Funkrufverfahren von einer Basiseinheit ausgerufen wird, der ausgerufene Teilnehmer ein für den ankommendenAnrufgeeignetes Endgerät mit Hilfe eines für das Funkrufverfahren benutzten Funkruf-Auswahl-Moduls auswählt und aktiviert und das ausgewählte Endgerät eine entsprechende Meldung zur Basiseinheit überträgt, um nach Aufbau der Verbindung dem Teilnehmer die Betriebsbereitschaft in üblicher Weise anzuzeigen.

Besonders zweckmäßig ist es bei der Benutzung des erfindungsgemäßen Kommunikationssystems, wenn zur Auswahl und Aktivierung eines Endgeräts ein Teilnehmeridentifikationssignal in Antwort aufein vom Teilnehmer erzeugtes Startsignal von dem Funkruf-Auswahl-Modul zum ausgewählten Endgerät übertragen wird.

Die Erfindungwird im folgenden beispielsweise anhand der Zeichnung näher erläutert. Es zeigen:
**Fig. 1** eine schematische Darstellung eines Funkruf-Auswahl-Moduls für ein erfindungsgemäßes Kommunikationssystem,
**Fig. 2** eine schematische Blockdarstellung zur Veranschaulichung eines erfindungsgemäßen Kommunikationssystems und
**Fig. 3** eine schematische Blockdarstellung zur Erläuterung der einzelnen Elemente des erfindungsgemäßen Kommunikationssystems.

In den verschiedenen Figuren der Zeichnung sind einander entsprechende Bauteile mit gleichen Bezugszeichen versehen.

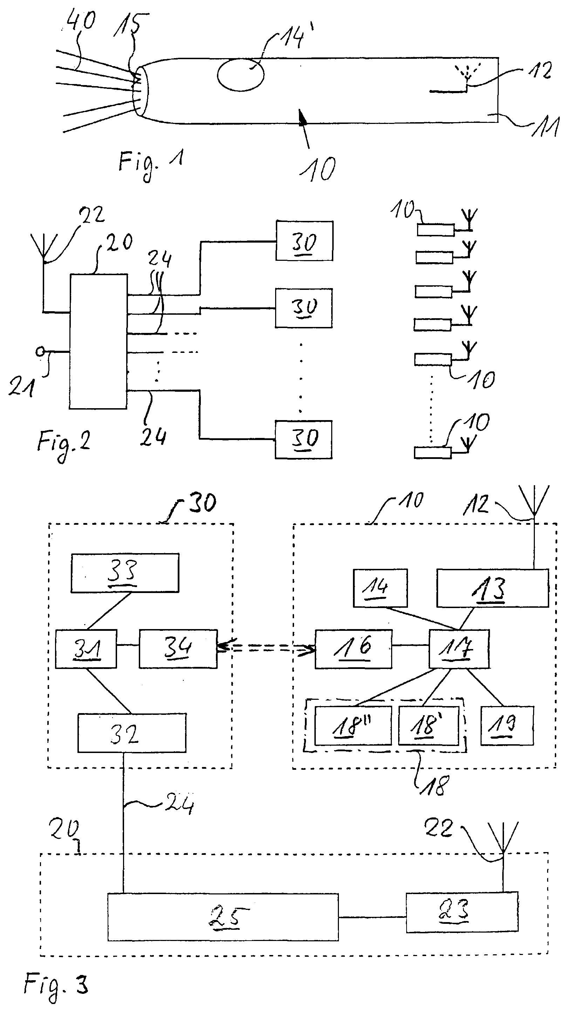

Wie Figur 1 zeigt, umfaßt ein Funkruf-Auswahl-Modul 10 ein Gehäuse 11, in dem eine Antenne 12 einer Paging- oder Funkrufeinheit 13 (siehe Figur 3) integriert ist. An dem Gehäuse 11 ist eine Taste 14' eines Signalgebers 14 und ein Schnittstellenfenster 15 einer gerichteten drahtlosen Schnittstelle. Obwohl hier jede gerichtete Funk- oder Luftschnittstelle verwendet werden kann, ist vorzugsweise eine Infrarot-IR-Schnittstelle 16 vorgesehen.

Wie Figur 3 weiter zeigt, umfaßt das Funkruf-Auswahl-Modul 10 eine Steuereinheit 17, die in Abhängigkeit von von der Funkrufeinheit 13 und dem Signalgeber 14 gelieferten Signalen akustische, optische und gegebenenfalls auch taktile oder haptische Meldesignale über eine Ausgabeeinheit 18 für den jeweiligen Benutzer oder Teilnehmer ausgibt. Die Ausgabeeinheit 18 weist dabei zumindest einen Summer 18' oder einen anderen geeigneten akustischen Alarmgeber auf. Optional kann zusätzlich eine optische Anzeigeeinrichtung 18'' vorgesehen sein.

Um jedes Funkruf-Auswahl-Modul 10 eindeutig einem Teilnehmer zuordnen zu können, ist mit der Steuereinheit 17 eine Teilnehmeridentifikationseinheit 19 vorgesehen, die vorzugsweise zur Aufnahme einer austauschbaren Benutzeridentifikationskarte, wie beispielsweise einer SIM-Karte ausgelegt ist.

Wie Figur 2 zeigt, weist das erfindungsgemäße Kommunikationssystem eine Vielzahl von Funkruf-Auswahl-Modulen 10 auf, wobeijedem der Module 10 mittels der Teilnehmeridentifikationseinheit 19 eine eigene Teilnehmernummer zugeordnet ist. Eine Basiseinheit 20 des Kommunikationssystems weist eine externe Schnittstelle 21 zur Kommunikation mit anderen Kommunikationssystemen, eine Antenne 22 als Sende- und Empfangselement einer Funkruf-Schnittstelleneinheit 23, sowie eine Vielzahl von Endgerät-Schnittstellen 24 auf, über die Endgeräte 30 an eine zentrale Steuereinheit 25 der Basiseinheit 20 angeschlossen sind. Die EndgerätSchnittstellen 24 können dabei sowohl drahtgebundene als auch drahtlose Schnittstellen, also IR- oder Funkschnittstellen sein. Die Endgeräte 30 bilden dabei mit der Basiseinheit 20 die Grundstruktur des Kommunikationssystems.

Jedes der Endgeräte 30, das ein Mobiltelefon, ein Faxgerät, ein Festnetztelefon, ein Bildtelefon oder dergleichen sein kann, weist eine Steuereinheit 31 auf, die den Datenaustausch zwischen einer an die Endgerät-Schnittstelle 24 angeschlossenen Schnittstelleneinheit 32 und einer Benutzerschnittstelle 33 während eines Kommunikationsbetriebs steuert. Außerdem ist an die Steuereinheit 31 eine IR-Schnittstelle 34 angeschlossen, die mit der IR-Schnittstelle 16 eines Funkruf-Auswahl-Moduls 10 zusammenwirkt, wenn ein Teilnehmer mit Hilfe des Funkruf-Auswahl-Moduls 10 ein entsprechendes Endgerät 30 auswählen und aktivieren will.

Zunächst wird die Arbeitsweise und Handhabung des erfindungsgemäßen Kommunikationssystems bei einem ankommenden Anruf erläutert.

Sobald die Basiseinheit 20 über die externe Schnittstelle 21 einen externen Anruf oder über eine der Endgeräte-Schnittstellen 24 einen Anruf für eine bestimmten Teilnehmer erhält, so wird von der zentralen Steuereinheit 25 ein Ausruf- oder Pagingbetrieb gestartet. Es wird also über die Funkruf-Schnittstelleneinheit 23 und die Antenne 22 ein Ausruf- oder Pagingsignal ausgesendet, das von den Funkruf-Auswahl-Modulen 10 empfangen wird. Das sogenannte Pagingsignal enthält dabei die Teilnehmernummer des angerufenen Teilnehmers, die von der Steuereinheit 17 im Funkruf-Auswahl-Modul 10 mit der dort in der Teilnehmeridentifikationseinheit 19 gespeicherten Teilnehmernummer verglichen wird. Das angesprochene Funkruf-Auswahl-Modul 10 erkennt in Folge dieses Vergleichs, daß es angesprochen ist und gibt über die Ausgabeeinheit 18 ein entsprechendes, vorzugsweise akustisches Meldesignal aus.

Der angerufene Teilnehmer wird auf diese Weise von der Basiseinheit 20 über das Funkruf-Auswahl-Modul 10 darüber informiert, daß ein Anruf für ihn eingetroffen ist. Um den Anruf anzunehmen, braucht der Teilnehmer nur noch ein ihm in seiner Nähe zur Verfügung stehendes Endgerät 30 auszuwählen und zu aktivieren. Hierzu richtet er das Funkruf-Auswahl-Modul 10 mit der IR-Schnittstelle 16 auf die IR-Schnittstelle 34 des ausgewählten Endgeräts 30 aus. Um dieses Ausrichten zu erleichtern, kann der IR-Schnittstelle 16 eine nicht näher gezeigte Lichtquelle zugeordnet sein, die ein mit dem IR-Sendestrahl zusammenfallendes Lichtbündel 40 aussendet. Die Aktivierung der Lichtquelle kann dabei über die Taste 14' des Signalgebers 14 oder über ein eigenes Einschaltmittel 30 erfolgen.

Nachdem die IR-Schnittstelle 16 mit der IR-Schnittstelle 34 ausgerichtet ist, betätigt der Benutzer die Taste 14' des Signalgebers 14 um ein Startsignal für die Steuereinheit 17 zu erzeugen, die daraufhin den Aktivierungs- und Auswahldialog mit dem entsprechenden Endgerät 30 durchführt. Das Endgerät 30 liefert dabei ein Bestätigungssignal an das Funkruf-Auswahl-Modul 10 zurück, das daraufhin dem Teilnehmer anzeigt, daß das ausgewählte Endgerät 30 zur Entgegennahme des Anrufs aktiviert ist.

Das ausgewählte und aktivierte Endgerät 30 meldet sich dann über die Endgeräte-Schnittstelle 24 bei der zentralen Steuereinheit 25 der Basiseinheit 20 als Endgerät des angerufenen Teilnehmers an. Daraufhin wird der Anruf von der Basiseinheit 20 an das ausgewählte und aktivierte Endgerät 30 weitergeleitet, das dann in üblicher Weise, beispielsweise durch ein entsprechendes Klingelsignal anzeigt, daß ein angekommener Anruf an diesem Gerät entgegengenommen werden kann.

Auf diese Weise wird es also einem Teilnehmer ermöglicht, in einer Umgebung, in der die Endgeräte, also Telefone und Faxe, einer Kommunikationsanlage allgegenwärtig sind, nur mit Hilfe eines leichten Funkruf-Auswahl-Moduls 10 einen an ihn persönlich gerichteten Anruf von jedem der Endgeräte aus entgegenzunehmen. Es ist somit nicht mehr erforderlich, daß jeder Teilnehmer mit einer eigenen Mobilstation oder einem eigenen Mobiltelefon, das trotz fortschreitender Miniaturisierung immernoch relativ groß ist, ausgerüstet sein muß.

Um selbst einen internen oder externen Anruf ausführen zu können, benutzt der Teilnehmer das Funkruf-Auswahl-Modul 10 in entsprechender Weise, um ein für ihn bequem erreichbares Endgerät 30 auszuwählen. Auch in diesem Fall meldet sich das Endgerät 30 als das Endgerät des entsprechenden Teilnehmers, so daß in der zentralen Steuereinheit 25 der Basiseinheit 20 die Berechtigung der Benutzung des Kommunikationssystems geprüft und gegebenenfalls für Abrechnungszwecke erfaßt werden kann.

Besonders vorteilhaft ist es, wenn das von der zentralen Steuereinheit 25 ausgegebene Pagingsignal dem Funkruf-Auswahl-Modul 10 nicht nur mitteilt, daß ein Anruf eingetroffen ist, sondern wenn gleichzeitig die Art des Anrufs, z.B. Gespräch, Bild-Gespräch oder Telefax, mitgeteilt wird. Hierbei weist das Funkruf-Auswahl-Modul 10 vorzugsweise eine optische Anzeigeeinheit 18'' in der Ausgabeeinheit 18 auf, um die Art des Anrufs dem Teilnehmer anzuzeigen, der daraufhin ein geeignetes Endgerät 30 auswählt.

Ferner ist es möglich, einen entgegengenommenen Anruf von einem Endgerät 30 auf ein anderes Endgerät 30 umzuleiten, wenn beispielsweise von einem normalen Telefon auf ein Bildtelefon umgeschaltet werden soll, indem einfach während der Kommunikation ein anderes Endgerät 30 ausgewählt wird.

## Patentansprüche

1. Kommunikationssystem mit
- einer Basiseinheit (20) zum Empfangen und Weiterleiten von Anrufen,
- zumindest zwei Endgeräten (30) und
- wenigstens einem Funkruf-Auswahl-Modul (10),
-- das über eine Funkruf-Schnittstelle (12, 13) von der Basiseinheit (20) ansprechbar ist und
-- das über eine Auswahlschnittstelle (16) mit jedem der Endgeräte (30) kommunizieren kann, um eines der Endgeräte (30) für eine gewünschte Kommunikation auszuwählen.

2. Kommunikationssystem nach Anspruch 1, **dadurch gekennzeichnet,** daß das Funkruf-Auswahl-Modul zur Kommunikation mit jedem der Endgeräte als Auswahlschnittstelle eine gerichtete drahtlose Schnittstelle, vorzugsweise eine Infrarotschnittstelle (16) aufweist.

3. Kommunikationssystem nach Anspruch 1 oder 2, **dadurch gekennzeichnet,** daß das Funkruf-Auswahl-Modul (10) eine Teilnehmeridentifikationseinheit (19) umfaßt.

4. Kommunikationssystem nach Anspruch 3, **dadurch gekennzeichnet,** daß die Teilnehmeridentifikationseinheit eine austauschbare Teilnehmeridentifikationskarte aufweist.

5. Kommunikationssystem nach Anspruch 1 bis 4, **dadurch gekennzeichnet,** daß das Funkruf-Auswahl-Modul (10) eine Steuereinheit (17) umfaßt, die in Abhängigkeit von einem Startsignal über die Auswahlschnittstelle (16) mit einem vom Teilnehmer ausgewählten Endgerät (30) kommuniziert, um dieses für die gewünschte Kommunikation zu aktivieren.

6. Kommunikationssystem nach einem der vorstehenden Ansprüche, **dadurch gekennzeichnet,** daß die Endgeräte (30) mit der Basiseinheit (20) die Basisstruktur einer Nebenstellenanlage bilden.

7. Kommunikationssystem nach einem der vorstehenden Ansprüche, **dadurch gekennzeichnet,** daß zumindest ein Teil der Endgeräte (30) über drahtgebundene Schnittstellen (24) mit der Basiseinheit (20) kommunizieren.

8. Kommunikationssystem nach einem der vorstehenden Ansprüche, **dadurch gekennzeichnet,** daß zumindest ein Teil der Endgeräte über Funkschnittstellen (24) mit der Basiseinheit (20) kommunizieren.

9. Verfahren zum Auswählen eines Endgeräts (30) in einem Kommunikationssystem, bei dem ein Teilnehmer ein für einen gewünschten Kommunikationsvorgang geeignetes Endgerät (30) mittels eines Funkruf-Auswahl-Moduls (10) auswählt und aktiviert.

10. Verfahren zum Weiterleiten eines ankommenden Anrufs in einem Kommunikationssystem, bei dem nach Empfang eines Anrufs ein angerufener Teilnehmer im Funkrufverfahren von einer Basiseinheit ausgerufen wird,
- der ausgerufene Teilnehmer ein für den ankommenden Anruf geeignetes Endgerät (30) mit Hilfe eines für das Funkrufverfahren benutzten Funkruf-Auswahl-Moduls (10) auswählt und aktiviert, und
- das ausgewählte Endgerät (30) eine entsprechende Meldung zur Basiseinheit (20) überträgt, um nach Aufbau der Verbindung dem Teilnehmer die Betriebsbereitschaft in üblicher Weise anzuzeigen.

11. Verfahren nach Anspruch 10, **dadurch gekennzeichnet,** daß beim Ausrufen eines angerufenen Teilnehmers Informationen über die Art des Anrufs mit übertragen werden.

12. Verfahren nach Anspruch 9, 10 oder 11, **dadurch gekennzeichnet,** daß zur Auswahl und Aktivierung eines Endgeräts (30) ein Teilnehmendentifikationssignal in Antwort auf ein vom Teilnehmer erzeugtes Startsignal von dem Funkruf-Auswahl-Modul (10) zum ausgewählten Endgerät (30) übertragen wird.
